(19) Europäisches Patentamt / European Patent Office / Office européen des brevets

(11) **EP 4 601 312 A1**

(12) **EUROPEAN PATENT APPLICATION**

(43) Date of publication:
**13.08.2025 Bulletin 2025/33**

(21) Application number: **25156187.4**

(22) Date of filing: **06.02.2025**

(51) International Patent Classification (IPC):
**H04N 23/695** $^{(2023.01)}$     **H04N 23/61** $^{(2023.01)}$

(52) Cooperative Patent Classification (CPC):
**H04N 23/695; H04N 23/61**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.02.2024 JP 2024018845**

(71) Applicant: **CANON KABUSHIKI KAISHA**
**Tokyo 146-8501 (JP)**

(72) Inventor: **IWATA, Takuya**
**Ohta-ku, Tokyo, 146-8501 (JP)**

(74) Representative: **TBK**
**Bavariaring 4-6**
**80336 München (DE)**

(54) **CONTROL DEVICE, CONTROL METHOD, AND COMPUTER-READABLE STORAGE MEDIUM**

(57)     A control device calculates, if a tracking target can be detected from a captured image, a direction toward the tracking target as a tracking subject direction based on a result of the detection and control, if no tracking target can be detected from the captured image, a control speed in a camera direction based on a tracking subject direction previously calculated.

**F I G. 1**

**Description**

BACKGROUND OF THE INVENTION

Field of the Invention

The present disclosure relates to an image capture control technology.

Description of the Related Art

In recent years, with the evolution of artificial intelligence (AI), an automatic tracking technology has been proposed that detects a subject in a video shot by a camera and controls the pan and tilt of the camera to track the subject.

There are some cases where a subject to be tracked (tracking subject) may temporarily disappear from the view of the camera when another subject crosses in front of the tracking subject or when the tracking subject moves and hides behind an obstacle such as a wall. If the tracking subject is not visible in the shot video, the tracking subject cannot be detected from the shot video.

In automatic tracking, if pan/tilt control is stopped immediately when a subject cannot temporarily be detected, the movements of the camera in the pan and tilt directions will suddenly be stopped, resulting in deterioration of the shot video.

Japanese Patent Laid-Open No. 2012-80221 discloses, for example, a technology in which, when a tracking target is shielded by a shielding object, the shielding object is set as a new tracking target.

When a tracking subject is shielded by another person moving in a direction opposite to the moving direction of the tracking subject, such as when persons pass each other, setting the person in the foreground as a new tracking target will result in a situation where the moving direction of the tracking target is suddenly reversed. As a result, a sudden change may occur in the pan/tilt control, and the tracking quality of a shot video may deteriorate.

SUMMARY OF THE INVENTION

The present disclosure provides a technology for reducing occurrence of a sudden change in camera direction when a tracking target is no longer detectable in a captured image.

The present invention in its first aspect provides a control device as specified in claims 1 to 10.

The present invention in its second aspect provides a control method as specified in claim 11.

The present invention in its third aspect provides a computer-readable storage medium as specified in claim 12.

Further features of the present disclosure will become apparent from the following description of exemplary embodiments with reference to the attached drawings.

BRIEF DESCRIPTION OF THE DRAWINGS

FIG. 1 is a diagram illustrating an example of a configuration of a system.
FIG. 2 shows block diagrams of examples of hardware configurations of a camera and a workstation.
FIG. 3 is a flowchart of processing performed when the camera tracks a tracking subject and shoots an image thereof.
FIG. 4 is a flowchart of processing performed when the workstation causes the camera to track a tracking subject and shoot an image thereof.
FIG. 5 is a diagram illustrating a display example in step S404 of FIG. 4.
FIG. 6A is a diagram illustrating an example of a display screen made by a display unit during subject tracking.
FIG. 6B is a diagram illustrating an example of a display screen made by the display unit during subject tracking.
FIG. 7A is a graph representing the relationship between a control speed and a distance in the horizontal direction between positions.
FIG. 7B is a graph representing the relationship between the angular difference between the angle of the tracking subject in the pan direction as viewed from the camera and the current pan angle of the camera and a pan control speed.
FIG. 8A is a diagram illustrating a captured image obtained by the camera.
FIG. 8B is a diagram illustrating a sphere whose radius is the distance from the camera to a subject in a captured image.
FIG. 8C is a diagram illustrating the three-dimensional coordinates (X, Y, Z) of a tracking subject and the pan direction tracking angle and the tilt tilt direction angle.
FIG. 9A is a diagram illustrating an example of subject detection characteristics of an inference unit.

FIG. 9B is a diagram illustrating an example of the subject detection characteristics of the inference unit.
FIG. 9C is a diagram illustrating an example of the subject detection characteristics of the inference unit.
FIG. 10 is a block diagram illustrating an example of a hardware configuration of a camera.
FIG. 11 is a flowchart performed when the camera tracks a tracking subject and shoots an image thereof.

DESCRIPTION OF THE EMBODIMENTS

Hereinafter, embodiments will be described in detail with reference to the attached drawings. Note, the following embodiments are not intended to limit the scope of the present disclosure. Multiple features are described in the embodiments, not all features are seen to be required, and multiple such features may be combined as appropriate. In the attached drawings, the same reference numerals are provided to the same or similar configurations, and redundant description thereof is omitted.

First Embodiment

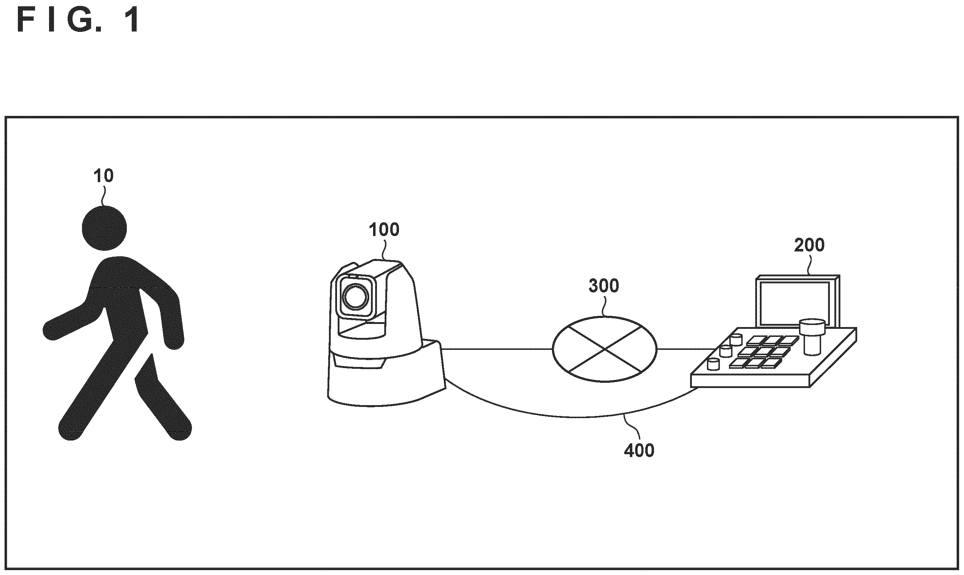

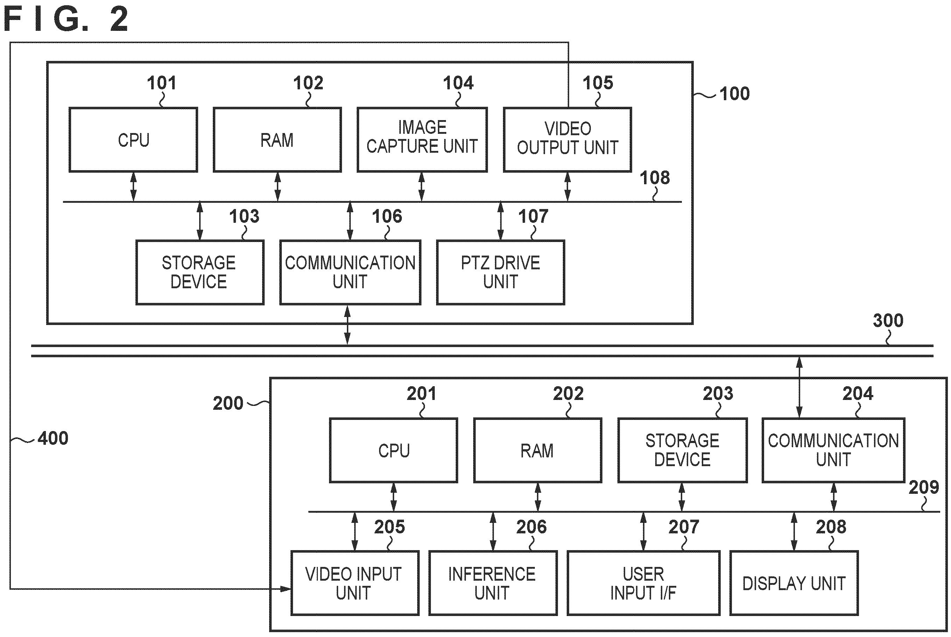

First, an example of a configuration of a system according to the present embodiment is described with reference to FIG. 1. As illustrated in FIG. 1, the system according to the present embodiment includes a camera 100 serving as an image capture apparatus that tracks a person 10 who is a subject to be tracked (tracking subject) and shoots an image thereof, and a workstation 200 serving as a control device that controls operations of the camera 100.
In the system according to the present embodiment, the camera 100 and the workstation 200 are connected to a network 300 such as a LAN or the Internet, and are configured to perform data communication with each other.
The workstation 200 can control the operation of the camera 100 by transmitting a distribution request command to request distribution of a captured image and setting commands to set various parameters to the camera 100 via the network 300. The camera 100 distributes a captured image to the workstation 200 in response to the distribution request command received from the workstation 200, and stores various parameters in response to the setting command received from the workstation 200. By transmitting commands to control the pan, tilt, and zoom (hereinafter, referred to as PTZ) to the camera 100, the workstation 200 can also control the PTZ of the camera 100.
Any connection format or communication protocol between the camera 100 and the workstation 200 may be used as long as it enables data communication between the camera 100 and the workstation 200. For example, the camera 100 and the workstation 200 may be directly connected to each other using a serial communication cable instead of a network.
In the system according to the present embodiment, the camera 100 and the workstation 200 are connected to each other via a video cable 400, and captured images shot by the camera 100 are transmitted to the workstation 200 via the video cable 400.
The method for transmitting captured images from the camera 100 to the workstation 200 is not limited to a specific method. For example, the camera 100 may transmit captured images to the workstation 200 via the above-mentioned network 300. In other words, the configuration for transmitting and receiving various information such as commands and captured images between the camera 100 and the workstation 200 is not limited to a specific configuration.
Next, examples of respective hardware configurations of the camera 100 and workstation 200 will be described with reference to the block diagram in FIG. 2. The hardware configurations illustrated in FIG. 2 are only examples of hardware configurations respectively applicable to the camera 100 and the workstation 200, and can be modified/changed as appropriate.
First, the configuration of the camera 100 is described. The camera 100 is a camera that tracks a tracking subject and shoots an image thereof. If the camera 100 is a camera that shoots a moving image, the camera 100 transmits images of frames of the moving image to the workstation 200 as captured images. If the camera 100 is a camera that shoots still images, the camera 100 transmits the still images to the workstation 200 as captured images.
A CPU 101 executes various types of processing using computer programs and data stored in a RAM 102. The CPU 101 controls the overall operation of the camera 100, and executes or controls various types of processing performed by the camera 100.
The RAM 102 has an area for storing captured images shot by the image capture unit 104 and an area for storing computer programs and data loaded from a storage device 103. The RAM 102 also has an area for storing various types of information received from the workstation 200 by a communication unit 106 and a work area for use when the CPU 101 executes various types of processing. The enables the RAM 102 to provide various types of areas as appropriate.
The storage device 103 is a non-volatile storage device such as a flash memory, an HDD, an SSD, or an SD card. The storage device 103 stores configuration data of the camera 100, computer programs and data used when activating the camera 100, computer programs and data relating to the basic operation of the camera 100, and the like. The storage device 103 also stores computer programs and data for causing the CPU 101 to execute or control various types of processing performed by the camera 100.
The image capture unit 104 includes an optical system, an image sensor that converts light formed through the optical system into electric charge (image signals), and an image processing circuit that generates a captured image based on the image signals. For example, a complementary metal oxide semiconductor (CMOS) image sensor can be used as the image sensor. A charge coupled device (CCD) image sensor may also be used as the image sensor.

A video output unit 105 is an interface for transmitting the captured image shot by the image capture unit 104 to the workstation 200 via the video cable 400. The video output unit 105 includes, for example, a serial digital interface (SDI) and a high-definition multimedia interface (HDMI®).

The communication unit 106 is an interface for performing data communication with the workstation 200 via the network 300. A PTZ drive unit 107 controls the image capture direction (pan and tilt angles) of the camera 100 (image capture unit 104) and the field angle (zoom) of the camera 100 (image capture unit 104), based on control commands received from the workstation 200.

The CPU 101, the RAM 102, the storage device 103, the image capture unit 104, the video output unit 105, the communication unit 106, and the PTZ drive unit 107 are all connected to a system bus 108. The constituent components of the camera 100 illustrated in FIG. 2 are driven by power obtained by rectifying AC power supplied from an external source to a predetermined voltage, or by power supplied from a (not illustrated) built-in battery.

The configuration of the workstation 200 will now be described. The workstation 200 is used as an example of a computer device, such as a personal computer (PC), a smart phone, or a tablet terminal. Any computer device may be used as long as it can achieve the functions associated with the workstation 200.

A CPU 201 executes various types of processing using computer programs and data stored in a RAM 202. The CPU 201 controls the overall operation of the workstation 200, and executes or controls various types of processing performed by the workstation 200.

The RAM 202 has an area for storing computer programs and data loaded from a storage device 203 and an area for storing various types of information received from the camera 100 by a communication unit 204. The RAM 202 also has an area for storing captured images received from the camera 100 by a video input unit 205. The RAM 202 has a work area for use when the CPU 201 and an inference unit 206 execute various types of processing. The enables the RAM 202 to provide various types of areas as appropriate.

The storage device 203 is a non-volatile storage device such as a flash memory, an HDD, an SSD, or an SD card. The storage device 203 stores configuration data of the workstation 200, computer programs and data used when activating the workstation 200, computer programs and data relating to the basic operation of the workstation 200, and the like. The storage device 203 also stores computer programs and data for causing the CPU 201 and the inference unit 206 to execute or control various types of processing described as processing that is performed by the workstation 200.

The communication unit 204 is an interface for performing data communication with the camera 100 via the network 300. A video input unit 205 is an interface for receiving captured images transmitted from the camera 100 via the video cable 400, and includes an SDI or HDMI, for example.

The inference unit 206 detects an object from an input image, and outputs the position and size of the object in the image. The inference unit 206 is, for example, an arithmetic device such as a graphics processing unit (GPU) that is specialized for image processing and inference processing. Typically, a GPU is advantageous for use in inference processing, but a reconfigurable logic circuit such as a field programmable gate array (FPGA) may also be used to realize the same function. The processing of the inference unit 206 may also be executed by the CPU 201.

A user input I/F 207 is a user interface such as a keyboard, a mouse, or a touch panel, and a user can operate the user input I/F 207 to input various types of instructions and information to the workstation 200.

A display unit 208 includes a liquid crystal screen or a touch panel screen, and can display processing results obtained by the CPU 201 and the inference unit 206 with images, text, and the like. The display unit 208 may be a projection device such as a projector that projects images and text.

While the present embodiment describes an example in which the workstation 200 includes the display unit 208, the present disclosure is not limited to this configuration. For example, a configuration is also possible in which the workstation 200 does not include the display unit 208 and a display monitor connected to the workstation 200 is provided.

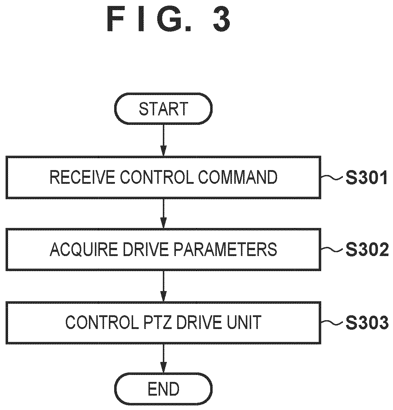

Next, processing performed by the camera 100 to track a tracking subject and shoot an image thereof will be described with reference to a flowchart in FIG. 3. The flowchart of FIG. 3 is a flowchart of processing that is executed in response to the camera 100 (CPU 101) detecting a reception of a control command transmitted from the workstation 200.

In step S301, the CPU 101 receives a control command transmitted from the workstation 200 via the communication unit 106, and stores the received control command in the RAM 102.

In step S302, the CPU 101 acquires PTZ control speeds of the camera 100 from the control command stored in the RAM 102 in step S301. The PTZ control speeds include the speed of changing the pan angle (angle in the pan direction) of the camera 100, the speed of changing the tilt angle (angle in the tilt direction) of the camera 100, and the speed of changing the zoom of the camera 100.

Based on the obtained PTZ control speeds, the CPU 101 obtains drive parameters, which are parameters to change the pan angle of the camera 100 at a designated speed, to change the tilt angle of the camera 100 at a designated speed, and to change the zoom of the camera 100 at a designated speed. Specifically, the CPU 101 obtains the drive parameters for driving and controlling the respective motors in the pan/tilt directions included in the PTZ drive unit 107, and the drive parameters for driving and controlling a motor of the zoom drive unit included in the PTZ drive unit 107. For example, the CPU 101 may obtain the drive parameters corresponding to the PTZ control speeds obtained from the control command, from "a table in which drive parameters corresponding to various PTZ control speeds are registered in advance". Thus, the method for acquiring drive parameters based on a control command is not limited to a specific method.

In step S303, the CPU 101 controls the PTZ drive unit 107 based on the drive parameters acquired in step S302. With this, the camera 100 can perform pan, tilt, and zoom operations (operations for changing the pan angle, tilt angle, zoom) based on the control command from the workstation 200.

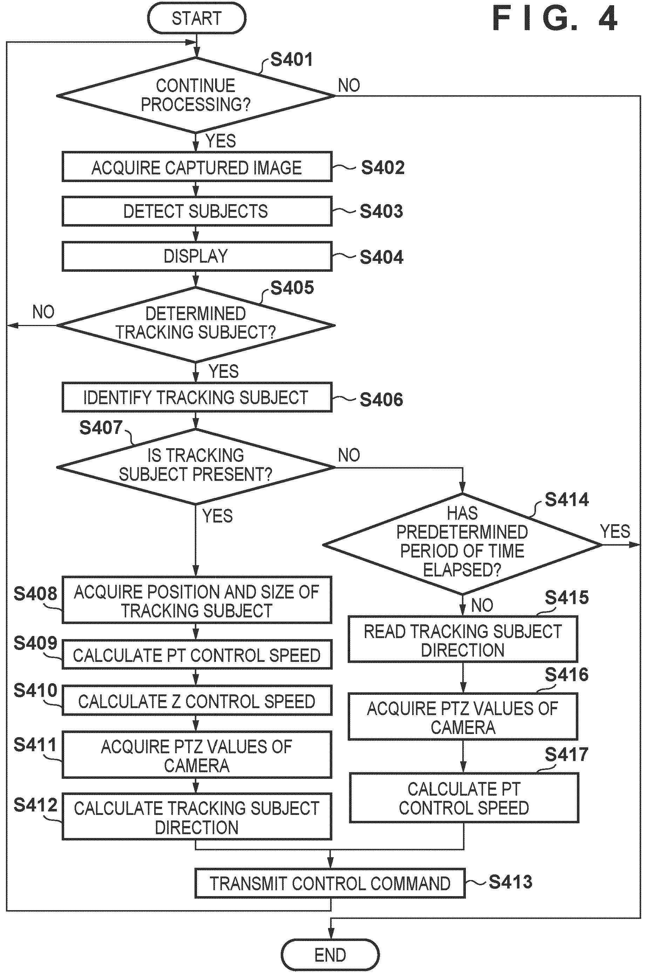

Next, processing performed by the workstation 200 to cause the camera 100 to track a tracking subject and shoot an image thereof will be described with reference to a flowchart in FIG. 4. The flowchart of FIG. 4 is a flowchart of processing that is executed in response to the CPU 201 detecting a tracking/shooting execution instruction input by a user via operation of the user input I/F 207. Thee tracking/shooting execution instruction may be input by an external apparatus. In this case, the flowchart of FIG. 4 will be a flowchart of processing that is executed in response to the CPU 201 detecting that a tracking/shooting execution instruction transmitted from the external apparatus has been received via the communication unit 204. Accordingly, the method for inputting a tracking/shooting execution instruction is not limited to a specific input method. The trigger for starting the processing according to the flowchart of FIG. 4 is also not limited to a specific trigger.

In step S401, the CPU 201 determines whether a command (end command) to end the processing according to the flowchart in FIG. 4 has been obtained via the communication unit 204 or the user input I/F 207. If it is determined that the end command has been obtained, the process according to the flowchart in FIG. 4 ends. If it is determined that the end command has not been obtained, the procedure moves to step S402.

In step S402, the CPU 201 receives a captured image transmitted from the camera 100 via the video input unit 205, and stores the received captured image in the RAM 202. In step S403, the CPU 201 inputs the captured image stored in the RAM 202 in step S402 to the inference unit 206. The inference unit 206 performs subject detection processing on the input captured image.

The subject detection processing performed by the inference unit 206 will be described. The inference unit 206 inputs the input captured image to a learned model created using a machine learning method such as deep learning to perform arithmetic processing on the learned model, and outputs information (rectangular frame information) that defines a rectangular frame including the whole body (human body) of each subject detected in the captured image. For example, the inference unit 206 outputs information indicating the center coordinates of the rectangular frame including the whole body of each subject in the captured image, and the sizes (height and width) of the rectangular frame, as rectangular frame information.

The rectangular frame information is not limited to this, and may be the coordinates of the upper left and lower right vertices of the rectangular frame, for example. A rectangular frame is not limited to a frame including the whole body of a subject, but may also be a rectangular frame including part of the subject, for example, a person's head or face. In this case, the learned model to be used need only be replaced by a learned model that outputs rectangular frame information that defines a rectangular frame including a desired region. The subject detection processing performed by the inference unit 206 is not limited to a method using a learned model. For example, the inference unit 206 may use a template matching method in which a template image of a subject is registered in advance in the storage device 203 or the like, and a region in a captured image with a high degree of similarity to the template image is detected as the subject's region.

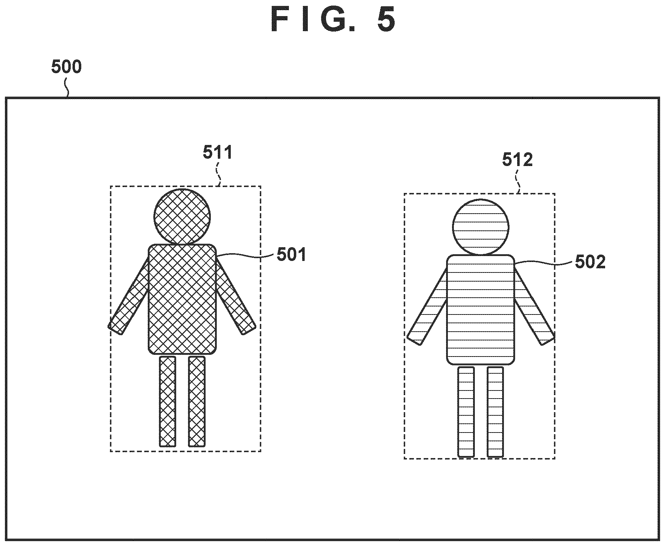

In step S404, the CPU 201 superimposes the rectangular frame corresponding to the rectangular frame information on the captured image stored in the RAM 202 in step S402, and displays the resulting image on the display unit 208. An example of the display in step S404 is illustrated in FIG. 5.

In the display example in FIG. 5, on a captured image 500 including a subject 501 and a subject 502, a rectangular frame 511 corresponding to rectangular frame information of the subject 501 and a rectangular frame 512 corresponding to rectangular frame information of the subject 502 are superimposed and displayed. The sizes of the rectangular frame 511 are the sizes indicated by the rectangular frame information of the subject 501, and the center coordinates of the rectangular frame 511 are the center coordinates indicated by the rectangular frame information of the subject 501. The sizes of the rectangular frame 512 are the sizes indicated by the rectangular frame information of the subject 502, and the center coordinates of the rectangular frame 512 are the center coordinates indicated by the rectangular frame information of the subject 502.

In step S405, the CPU 201 determines whether any tracking subject has been designated. If it is determined that any tracking subject has been designated, the procedure moves to step S406. If it is determined that no tracking subject has been designated, the procedure moves to step S401.

The method for designating a tracking subject is not limited to a specific method. For example, in the example in FIG. 5, when a user operates the mouse serving as the input I/F 207 to perform a click operation with the mouse cursor superimposed on the rectangular frame 511, the CPU 201 may designate the subject 501 corresponding to the rectangular frame 511 as the tracking subject.

The CPU 201, for example, may also designate, from among the subjects detected in the captured image, the subject corresponding to the rectangular frame information indicating the largest size as the tracking subject. The CPU 201 may also designate the subject corresponding to the rectangular frame information indicating the center coordinates closest to the center position of the captured image, as the tracking subject.

In step S406, the CPU 201 performs identification processing for identifying the tracking subject from among the subjects detected in step S403. Then, if the CPU 201 can identify the tracking subject from the subjects detected in step S403, the CPU 201 sets the value of a "presence flag indicating whether the tracking subject is present in the captured image" stored in the RAM 202 to "True" indicating that "the tracking subject is present", and stores the rectangular frame information of this tracking subject from among the rectangular frame information output in step S403, in RAM 202.

If the CPU 201 is not able to identify the tracking subject from the subjects detected in step S403, the CPU 201 sets the value of the presence flag stored in the RAM 202 to "False:, indicating that "the tracking subject is not present".

Since the initial step S406 is the first instance of step S406 after the designation of the tracking subject, the CPU 201 sets the value of the presence flag to "True", and stores the rectangular frame information of the designated tracking subject in RAM 202.

In the second and subsequent instances of step S406, the CPU 201 performs the processing described below. The CPU 201 calculates the degree of similarity of the rectangular frame information of each of the subjects detected in step S403, with the "rectangular frame information of the tracking subject" stored in the RAM 202 ("rectangular frame information of the tracking subject" stored in the RAM 202 in the recent step S406). For example, the CPU 201 calculates, as the degree of similarity, intersection over union (IoU) of the rectangular frame corresponding to the rectangular frame information of each of the subjects detected in step S403, with the rectangular frame corresponding to the "rectangular frame information of the tracking subject" stored in RAM 202 ("rectangular frame information of the tracking subject" stored in RAM 202 in the recent step S406). The greater the overlap between rectangular frames is, the higher the IoU score is.

The CPU 201 then identifies the rectangular frame information for which the highest degree of similarity has been calculated from among the rectangular frame information of the subjects detected in step S403 as the rectangular frame of the tracking subject. That is, the CPU 201 identifies the subject for which the highest degree of similarity has been calculated from among the subjects detected in step S403 as the tracking subject.

If the degrees of similarity calculated for the rectangular frame information of the subjects detected in step S403 are less than a threshold, the CPU 201 determines that it was not able to identify the tracking subject.

The above-described processing for identifying the tracking subject from the captured image is an example, and the present disclosure is not limited to the above-described processing. The processing for determining whether a tracking subject is present in a captured image is also not limited to the above-described processing.

For example, the CPU 201 may employ processing for predicting the motion of the tracking subject in the similarity degree calculation. In this case, the CPU 201 need only predict the current rectangular frame of the tracking subject based on the rectangular frame information of two most previous tracking subjects, and calculate the IoU between the predicted rectangular frame and the respective rectangular frames of the subjects, as the degrees of similarity. By employing motion prediction, it is possible to improve the accuracy of identifying a tracking subject when the subject is moving.

As another example, the CPU 201 may calculate the degrees of similarity using not only rectangular frame information of subjects but also subject's features relating to the captured image. For example, the CPU 201 may acquire image-related features such as luminance histograms within the rectangular frames, and embed the similarity between the features for the similarity degree calculation.

Alternatively, with use of a machine learning method such as deep learning, the CPU 201 may use a learned model that outputs a feature vector of the human body to obtain features, and embed the features for the similarity degree calculation.

In step S407, the CPU 201 determines whether the value of the presence flag is "True" or "False". As a result of this determination, if the value of the presence flag is "True", it is determined that the tracking subject is present in the captured image, and processing moves to step S408. If the value of the presence flag is "False", it is determined that no tracking subject is present in the captured image, and processing proceeds to step S414.

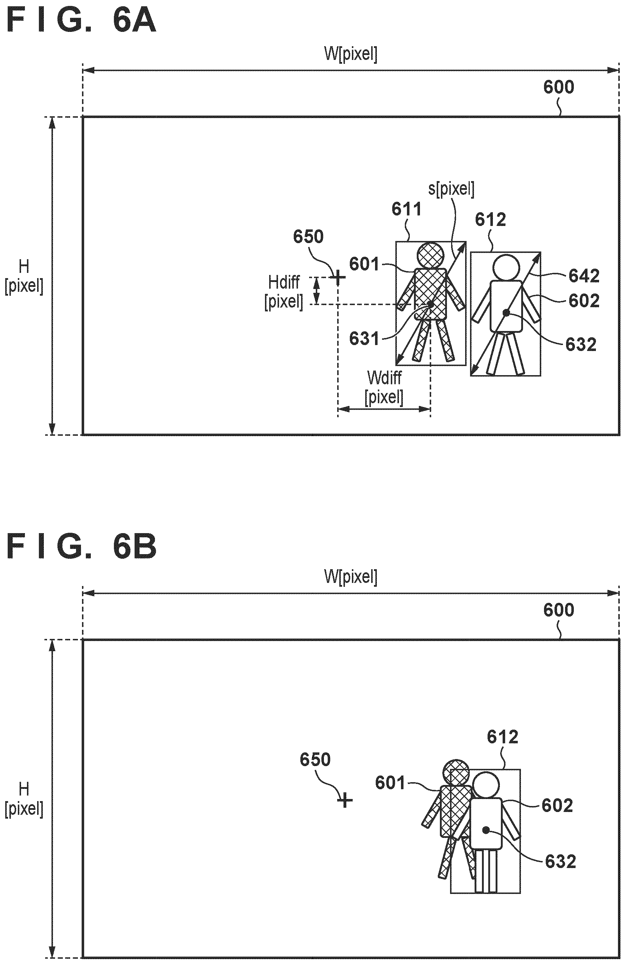

In step S408, the CPU 201 reads the rectangular frame information of the tracking subject (center coordinates and sizes of the rectangular frame of the tracking subject) stored in the RAM 202. In step S409, the CPU 201 calculates the speed (PT control speed) at which the camera 100 changes the camera direction (pan angle and tilt angle) to track the tracking subject and shoot an image thereof. The processing in step S409 will be explained with reference to specific examples illustrated in FIGS. 6A and 6B.

FIGS. 6A and 6B are diagrams illustrating examples of a display screen made by the display unit 208 during subject tracking. FIG. 6A illustrates a display example of a captured image 600 that includes a subject 601, which is a tracking subject, and a subject 602, which is not a tracking target. The number of pixels in the horizontal direction of the captured image 600 is W (pixel) and the number of pixels in the vertical direction is H (pixel).

A rectangular frame 611 is a rectangular frame corresponding to the rectangular frame information of the subject 601, and a rectangular frame 612 is a rectangular frame corresponding to the rectangular frame information of the subject 602. A position 631 indicates the "center coordinates of the subject 601" indicated by the rectangular frame information of the subject 601, and a position 632 indicates the "center coordinates of the subject 602" indicated by the rectangular frame information of the subject 602. In FIGS. 6A and 6B, the size of the rectangular frame indicated by each piece of rectangular frame information is assumed to indicate the length of the diagonal line of the rectangular frame. A size S (pixel) indicates the size of the rectangular frame indicated by the rectangular frame information of the subject 601, and a size 642 indicates the size of the rectangular frame indicated by the rectangular frame information of the subject 602. A position 650 indicates the target position of the tracking shooting. In the present embodiment, the workstation 200 controls the pan and tilt angles of the camera 100 so that the center coordinates of the tracking subject in the captured image approach the target position 650. In the following, for discussion purposes, the target position 650 is the center position of the captured image, but the present disclosure is not limited to this and the target position 650 may be any position in the captured image.

In such a case, the CPU 201 calculates a distance Wdiff (pixel) in the horizontal direction between the position 631 and the target position 650, and a distance Hdiff (pixel) in the vertical direction between the position 631 and the target position 650. The CPU 201, for example, calculates (the horizontal coordinate of the target position 650 - the horizontal coordinate of the position 631) as Wdiff (pixel). The CPU 201, for example, also calculates (the vertical coordinate of the target position 650 - the vertical coordinate of the position 631) as Hdiff (pixel).

The CPU 201 then calculates the pan control speed Vp, which is the speed at which the pan angle of the camera 100 is changed, by calculating Formula 1 below, and calculates the tilt control speed Vt, which is the speed at which the tilt angle of the camera 100 is changed, by calculating Formula 2 below:

$$Vp = (Wdiff/W) \times Kp1 \ldots \text{Formula 1}$$

$$Vt = (Hdiff/H) \times Kt1 \ldots \text{Formula 2}.$$

Kp1 in Formula 1 and Kt1 in Formula 2 are both proportionality coefficients. That is, using Formulas 1 and 2, the control speed is faster the larger the distance between the target position and the center coordinates of the tracking subject is, and the control speed is slower the smaller the distance is. When the center coordinates of the tracking subject reach the target position and the distance is zero, the control speed becomes zero. If a faster control speed is desired based on the distance between the target position and the center coordinates of the tracking subject, it is sufficient to increase the proportionality factor (Kp1 or Kt1).

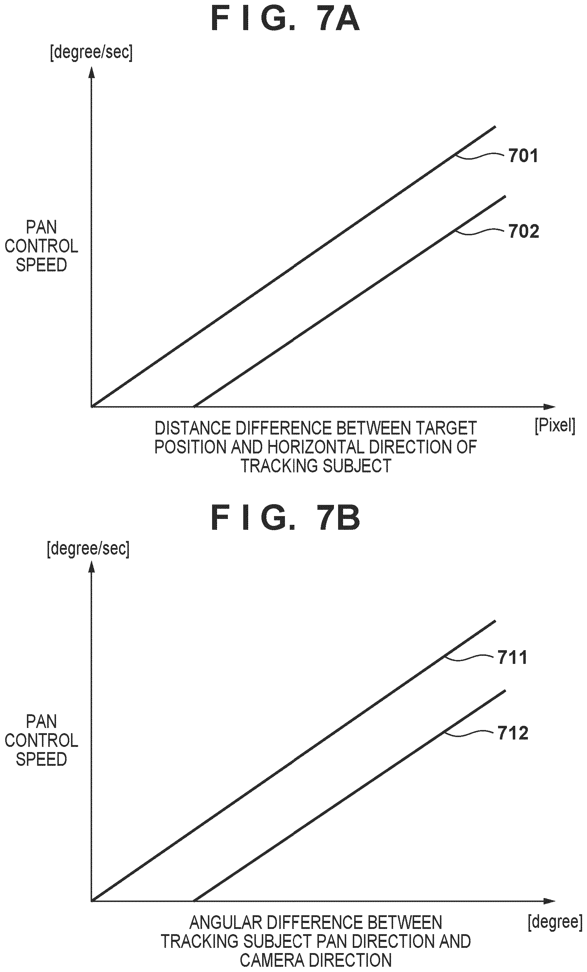

A graph 701 illustrated in FIG. 7A is a graph representing a relationship between Wdiff and Vp expressed by Formula 1. The horizontal axis indicates Wdiff and the vertical axis indicates Vp. It is also possible to set the control speed to zero when the distance between the target position and the center coordinates of the tracking subject is less than a threshold (that is, when the distance is very small). For example, the CPU 201 may calculate Vp with use of a calculation formula such that Vp is zero in a section where Wdiff is the threshold or less, as illustrated in a graph 702 in FIG. 7A.

The above-described example has been described taking a case where a control speed is calculated using a formula in which the relationship between the distance and the control speed is linear. However, the formula for calculating the control speed is not limited to such a linear formula, and other formulas may also be used to calculate the control speed as long as the formulas have the relationship such that the larger the distance is, the higher the control speed is, and the smaller the distance is, the lower the control speed is. This is true even if the control speed is set to zero when the distance between the target position and the center coordinates of the tracking subject is less than the threshold (i.e., when the distance is very small).

In step S410, the CPU 201 calculates the speed (Z control speed) at which the camera 100 changes the zoom to track the tracking subject and shoot an image thereof. In the present embodiment, the CPU 201 controls the zoom of the camera 100 so that the size of the tracking subject in the captured image is a defined size.

In the present embodiment, the "size of the rectangular frame of the tracking subject" indicated by the rectangular frame information of the tracking subject read in the initial step S408 is used as the "defined size". However, the present disclosure is not limited to this. For example, the defined size may be the size designated by the user through operation of the user input I/F 207. Alternatively, the CPU 201 may dynamically change the defined size.

The processing in step S410 will be explained with reference to the specific examples illustrated in FIGS. 6A and 6B. The CPU 201 calculates the zoom control speed Vz, which is the speed at which the zoom of the camera 100 is changed, by calculating Formula 3 below:

$$Vz = (Sb-S) \times Kz \ldots \text{Formula 3}.$$

Sb is a reference subject size (pixel) (the above-described defined size), and Kz is the proportionality coefficient.

In other words, the zoom control speed is higher the larger the difference between the reference subject size and the size of the tracking subject is, and the zoom control speed is lower the smaller the difference is. When the size of the tracking subject matches the reference subject size, the zoom control speed is zero. With this, it is possible to perform zoom control such that the size of the tracking subject is kept constant.

As with the pan/tilt control, if a faster zoom control speed is desired, it is sufficient to increase the proportionality coefficient Kz. The CPU 201 may also set the zoom control speed to zero if the difference between the size of the tracking subject and the reference subject size is less than a threshold, so that zoom control is prevented from being performed when the difference is less than the threshold (i.e., when the difference is very small).

In step S411, the CPU 201 transmits a command to inquire about a set (PTZ values) of the current pan angle, current tilt angle, current horizontal field angle, and current vertical field angle, to the camera 100 via the communication unit 204. The CPU 201 then receives the set transmitted from the camera 100 in response to this command, via the communication unit 204, and stores the received set in the RAM 202.

The pan and tilt angles are angles with respect to a given orientation (hereinafter referred to as frontal orientation) of the camera 100. In the following description, the current pan angle of the camera 100 is denoted as PANcur (degree), and the current tilt angle of the camera 100 is denoted as TILTcur (degree). Also, the current horizontal field angle of the camera 100 is denoted as FOVh (degree), the current vertical field angle of the camera 100 is denoted as FOVv (degree).

In step S412, the CPU 201 calculates the direction of the tracking subject (tracking subject direction) as viewed from the camera 100 with respect to the frontal orientation of the camera 100. An example of calculation of the tracking subject direction will be described with reference to FIG. 6A. The CPU 201 calculates the horizontal field angle FOVhp per pixel of the captured image as an approximation, by calculating Formula 4 below:

$$FOVhp = FOVh/W \dots Formula\ 4.$$

Here, it is assumed that the position 631 of the tracking subject is away from the center position (target position 650) of the captured image 600 by Wdiff (pixel) in the horizontal direction. At this time, the CPU 201 calculates the tracking subject direction in the pan direction, that is, the angle PANtarget (degree) of the tracking subject in the pan direction as viewed from the camera 100 with respect to the front orientation of the camera 100, by calculating Formula 5 below:

$$PANtarget = FOVhp \times Wdiff + PANcur \dots Formula\ 5.$$

The CPU 201 then stores the calculated angle PANtarget in the RAM 202. Similarly, the CPU 201 calculates FOVvt = FOVv/H to obtain the vertical field angle FOVvt per pixel of the captured image as an approximation. If it is assumed here that the position 631 of the tracking subject is away from the center position of the captured image 600 in the vertical direction by Hdiff (pixel), the CPU 201 calculates TILTtarget = FOVvt x Hdiff + TILEcur to obtain the tracking subject direction in the tilt direction, that is, the angle TILTtarget (degree) of the tracking subject in the tilt direction as viewed from the camera 100 with respect to the front orientation of the camera 100. The CPU 201 then stores the calculated angle TILTtarget in the RAM 202.

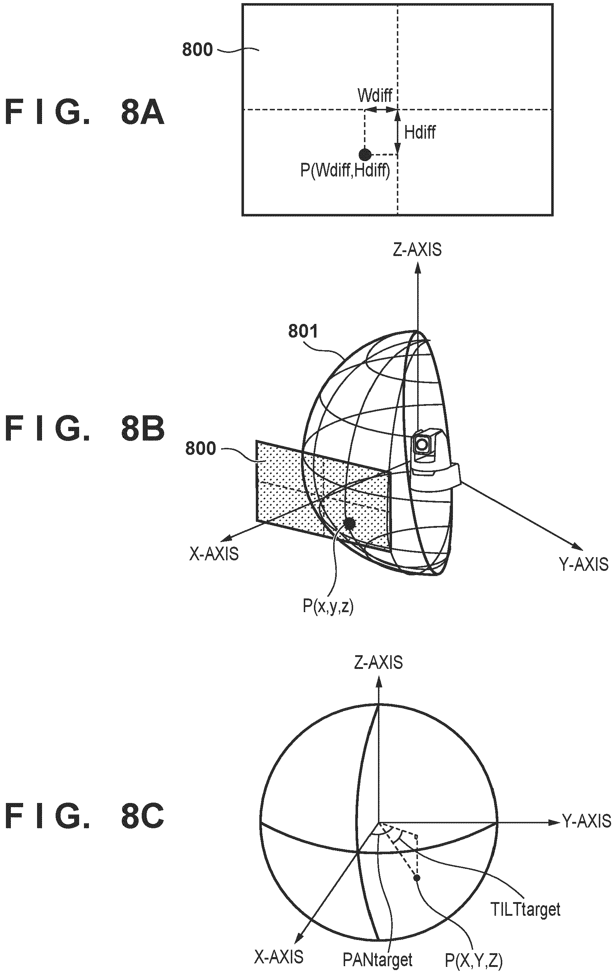

The method for calculating the tracking subject direction is not limited to the above-described method. For example, the CPU 201 may calculate the tracking subject direction taking into consideration that the camera direction of the camera 100 changes spherically around the camera 100 due to the rotation of the PTZ drive unit 107. An example calculation in this case will be described with reference to FIGS. 8A to 8C.

FIG. 8A is a diagram illustrating a captured image 800 shot by the camera 100, in which a tracking subject is located at a position P. The position P is away from the center of the captured image 800 by Wdiff (pixel) in the horizontal direction and by Hdiff (pixel) in the vertical direction. It is assumed that the angular differences between the center of the captured image 800 and the position P calculated by Formula 4 are defined as PANdiff (degree) and Tiltdiff (degree).

FIG. 8B illustrates a sphere 801 whose radius is the distance from the camera 100 to the subject in the captured image, in a three-dimensional space with the position of the camera 100 being the origin O. It is assumed that the front of the camera 100 is directed in the X-axis direction in the three-dimensional space, and a captured image rotates about the Z-axis when the camera 100 is driven in the pan direction, and rotates about the Y-axis when the camera 100 is driven in the tilt direction. Therefore, if the captured image 800 is an image shot with the camera 100 facing the front, the captured image 800 is positioned orthogonally to the X axis as illustrated in FIG. 8B.

Here, the CPU 201 first calculates the three-dimensional coordinates (x, y, z) of the position P of the tracking subject in the state illustrated in FIG. 8B using Formulas 6, 7, and 8 below. Since it is sufficient that only the direction of the tracking subject is obtained in this processing, the radius of the sphere 801 may be any value, but for ease of calculation, the radius is assumed to be 1 in the following calculations:

$$x = 1 \qquad \dots Formula\ 6$$

$$y = \tan(\text{PANdiff}) \qquad \ldots \text{ Formula 7}$$

$$z = \tan(\text{TILTdiff}) \qquad \ldots \text{ Formula 8.}$$

Since these are the coordinates when the camera 100 is facing the X-axis direction, the CPU 201 then converts the above-described three-dimensional coordinates (x, y, z) based on the direction in which the camera 100 is facing. This calculation can be performed by rotating the coordinate axis in the three-dimensional space using a known three-dimensional rotational coordinate conversion calculation, for example. Specifically, if the current pan and tilt angles of the camera 100 are respectively PANcur and TILTcur, the CPU 201 can calculate the three-dimensional coordinates (X, Y, Z) of the tracking subject after rotating the coordinate axis, by calculating Formula 9 below:

$$\begin{pmatrix} X \\ Y \\ Z \end{pmatrix} = \begin{pmatrix} \cos(\text{PANcur}) & -\sin(\text{PANcur}) & 0 \\ \sin(\text{PANcur}) & \cos(\text{PANcur}) & 0 \\ 0 & 0 & 1 \end{pmatrix} \begin{pmatrix} \cos(\text{TILTcur}) & 0 & -\sin(\text{TILTcur}) \\ 0 & 1 & 0 \\ \sin(\text{TILTcur}) & 0 & \cos(\text{TILTcur}) \end{pmatrix} \begin{pmatrix} x \\ y \\ z \end{pmatrix}$$

Formula 9.

FIG. 8C illustrates the three-dimensional coordinates (X, Y, Z) of the tracking subject calculated using Formula 9, and the pan angle PANtarget and the tilt angle TILTtarget. Ultimately, the CPU 201 calculates the pan angle PANtarget and tilt angle TILTtarget of the tracking subject with reference to the reference direction of the camera 100, by calculating Formulas 10 and 11 below based on the three-dimensional position (X, Y, Z) of the tracking subject:

$$\text{PANtarget} = \arctan(Y/X) \qquad \ldots \text{ Formula 10}$$

$$\text{TILTtarget} = \arctan(Z/\sqrt{(X^2+Y^2)}) \ldots \text{ Formula 11.}$$

Using Formulas 6 to 11 above, the CPU 201 can calculate the tracking subject direction taking into considering the rotation of the PTZ drive unit 107. In step S413, the CPU 201 generates control commands to cause the PTZ drive unit 107 to change the pan angle of the camera 100 at the pan control speed Vp, change the tilt angle of the camera 100 at the tilt control speed Vt, and change the zoom of the camera 100 at the zoom control speed Vz. The CPU201 then transmits the generated control commands to the camera 100 via the communication unit 204.

Here, it is assumed that the captured image 600 illustrated in FIG. 6A is input from the camera 100 to the workstation 200, and then the captured image 600 illustrated in FIG. 6B is input. The captured image 600 illustrated in FIG. 6B is an image in which the subject 601 is hidden behind the subject 602 as a result of the subject 601 in the captured image 600 illustrated in FIG. 6A moving to the right and the subject 602 in front of the camera 100 relative to the subject 601 moving to the left.

When the captured image 600 of FIG. 6A is input to the workstation 200, the subject 601, which is the tracking subject, can be detected in the captured image 600, and thus the subject 601 is displayed with the rectangular frame 611. However, if the captured image 600 of FIG. 6B is input to the workstation 200, the subject 601 is hidden behind the subject 602 in the captured image 600, so the subject 601 cannot be detected in the captured image 600. Therefore, no rectangular frame is displayed on the subject 601.

Accordingly, if the captured image 600 of FIG. 6A is input to the workstation 200, the processing of step S407 is followed by the processing of step S408. If the captured image 600 of FIG. 6B is input to the workstation 200, the processing of step S407 is followed by the processing of step S414.

In step S414, the CPU 201 determines whether the period of time in which the value of the presence flag is "False" (i.e., the period of time in which the tracking subject is not present in the captured image) is not shorter than a predetermined period of time.

As a result of this determination, if the period of time in which the value of the presence flag is "False" is longer than or equal to the predetermined period of time, the CPU 201 determines that the situation is such that it is difficult to redetect the tracking subject, and the processing according to the flowchart in FIG. 4 ends. At the end of the processing, control may be performed such that the camera 100 has the camera direction and the shooting field angle set in advance by the user. In this case, information on the camera direction and the shooting field angle set by the user in advance can be recorded, and the CPU 201 can communicate a control command to the camera 100 before the end of processing. If the period of time in which the value of the presence flag is "False" is shorter than the predetermined period of time, the processing moves to step S415.

The "predetermined period of time" may be any period of time, and may be a preset period of time, a period of time set by the user via operation of the user input I/F 207, or a period of time dynamically changed by the CPU 201. There is no need to set a timeout by the elapse of the predetermined period of time.

The CPU 201, for example, may perform processing in steps S415 and the following steps upon detecting an occurrence of an event. The event is not limited to a specific event, and may be, for example, an event in which "the user has input a specific instruction by operating the user input I/F 207".

In step S415, the CPU 201 reads, from the RAM 202, the tracking subject direction calculated in the most recently executed step S412. For example, it is assumed that the captured image 600 of FIG. 6A was acquired in the previous step S402 and the captured image 600 of FIG. 6B is acquired in the current step S402. In this case, the CPU 201 will acquire the tracking subject direction of the tracking subject in the "captured image 600 of FIG. 6A" acquired in the previous step S402.

In step S416, the CPU 201 transmits a command to inquire about the above-described set, to the camera 100 via the communication unit 204 in the same manner as in step S411 above. The CPU 201 then receives, via the communication unit 204, the set transmitted from the camera 100 in response to the command, and stores the received set in the RAM 202.

In step S417, the CPU 201 calculates the pan control speed Vp and the tilt control speed Vt by calculating the following Formulas 12 and 13, respectively, based on the tracking subject direction (PANtarget and TILTtarget) read in step S415, and the current pan angle PANcur and current tilt angle TILTcur included in the set obtained in step S416.

$$Vp = (PANtarget - PANcur) \times Kp2 \quad \dots \text{Formula 12}$$

$$Vt = (TILTtarget - TILTcur) \times Kt2 \quad \dots \text{Formula 13}$$

Kp2 in Formula 12 and Kt2 in Formula 13 are both proportionality coefficients. Using Formulas 12 and 13, the control speed is faster the larger the angular difference between the tracking subject direction immediately before the tracking subject is no longer present in the captured image and the current camera direction of the camera 100 is, and the control speed is slower the smaller the angular difference is.

Thus, if the workstation 200 can detect a tracking target in a captured image, the workstation 200 calculates the direction toward the tracking target as the tracking subject direction, based on the result of the detection. If the workstation 200 cannot detect any tracking target from a captured image, the workstation 200 controls the control speed of the camera direction based on the tracking subject direction calculated in the past.

A graph 711 illustrated in FIG. 7B is a graph representing a relationship between "the angular difference between the angle in the pan direction of the tracking subject as viewed from the camera 100 and the current pan angle of the camera 100" expressed by Formula 12 and the "pan control speed". The horizontal axis indicates "the angular difference between the angle in the pan direction of the tracking subject as viewed from the camera 100 and the current pan angle of the camera 100" and the vertical axis indicates the "pan control speed". If a faster pan control speed is desired, it can be achieved by increasing the proportionality coefficient Kp2. If the "angle difference between the angle in the pan direction of the tracking subject as viewed from the camera 100 and the current pan angle of the camera 100" is less than a threshold (that is, if the angle difference is very small), it is also possible to set the pan control speed to zero so that pan control is prevented. In this case, the CPU 201 may calculate the pan control speed using a formula such that the pan control speed becomes zero in a section where the "angular difference between the angle in the pan direction of the tracking subject as viewed from the camera 100 and the current pan angle of the camera 100" is less than the threshold, as illustrated in a graph 712 in FIG. 7B.

As described above, in step S417, the tracking subject direction calculated in the most recently executed step S412 is used. Therefore, in step S412, the tracking subject direction may be calculated taking into consideration the difference in control cycle between step S412 and step S417. For example, the CPU 201 may perform processing for predicting the motion of the tracking subject in step S412 to predict the position of the tracking subject in the next cycle and then perform the same arithmetic operation based on the difference between the predicted position of the tracking subject and the current camera direction, thereby calculating the tracking subject direction. By performing such prediction processing, it is possible to calculate the pan/tilt speed based on the position of the tracking subject at the point in time when the pan/tilt speed is actually calculated.

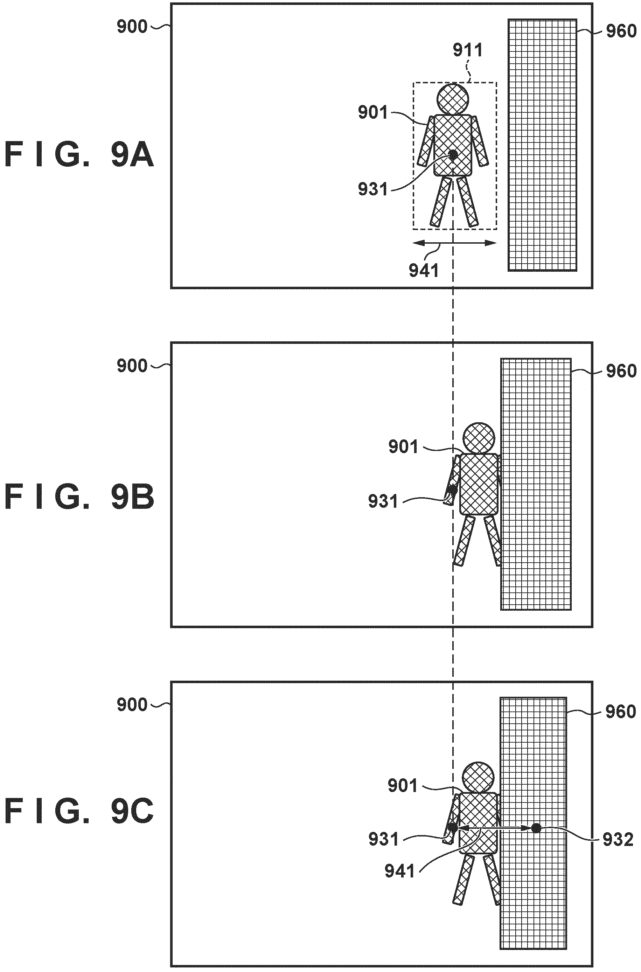

As another example of calculation of the tracking subject direction, the CPU 201 may correct the tracking subject direction taking into consideration the subject detection characteristics of the inference unit 206. FIGS. 9A to 9C are diagrams illustrating an example of the subject detection characteristics of the inference unit 206. FIGS. 9A to 9C illustrate the state in which a subject 901 in a captured image 900 moves to the right and the subject 901 becomes shielded by a shielding object 960.

Since the subject 901 can be detected from the captured image 900 of FIG. 9A, a rectangular frame 911 of the subject 901, which is the result of the detection of the subject 901 by the inference unit 206, is superimposed on the captured image 900. A position 931 is located at the center coordinates of the rectangular frame 911 of the subject 901 in the captured image 900 of FIG. 9A, and a width 941 is the horizontal length (number of pixels) of the rectangular frame 911.

If the inference unit 206 has a characteristic of not capable of detecting a subject even if the subject is slightly shielded, the subject 901 is not detected from the captured images 900 in FIGS. 9B and 9C because part of the subject 901 is shielded by the shielding object 960. Therefore, the rectangular frame of the subject 901 is not superimposed on these captured images 900.

In the above description, if the captured image 900 of FIG. 9A was acquired in the previous step S402 and the captured image 900 of FIG. 9B is acquired in the current step S402, the CPU 201 calculates, in the current step S417, the control speed of the camera direction so that it approaches the direction to the position 931 (the tracking subject direction calculated based on the captured image 900 of FIG. 9A).

Therefore, in step S412, the CPU 201 may also correct the calculated tracking subject direction to a direction obtained by moving the calculated tracking subject direction in the direction of the pan control speed Vp by the width 941. The position on the captured image in the corrected direction is illustrated as a position 932 in FIG. 9C. Similar to FIG. 9B, the captured image 900 of FIG. 9C is a captured image acquired in step S402 following the captured image 900 of FIG. 9A.

As a result, if the captured image 900 of FIG. 9C is acquired in the current step S402, the camera direction of the camera 100 can be determined, in the current step S417, based on the difference between the tracking subject direction corresponding to the position 932 and the current pan angle of the camera 100.

The present disclosure is not limited to determining the amount of correction for the tracking subject direction based on the size of the rectangular frame of the tracking subject, and it is also possible to use a predetermined amount determined experimentally in advance. By correcting the tracking subject direction in this manner, it is possible to orient the pan/tilt directions to directions closer to the direction in which the tracking subject is actually shielded, while suppressing the influence of the subject detection characteristics of the inference unit 206.

The period of time used for comparison with the "predetermined period of time" in step S414 is not limited to "the period of time in which the value of the presence flag is "False" (i.e., the period of time in which the tracking subject is not present in the captured image). For example, the timekeeping may be started at the timing at which the camera 100 faces the tracking subject direction immediately before the camera 100 can no longer identify the tracking subject due to the processing in step S417, and the PTZ of the camera 100 is stopped. In this case, in step S414, the CPU 201 may compare the period of time in which the state in which "the camera 100 faces the tracking subject direction immediately before the camera 100 can no longer identify the tracking subject and the PTZ of the camera 100 is stopped" continues, with the predetermined period of time. By performing such control, a timeout is set based on the time elapsed since the pan/tilt is stopped, and thus it is easier for the user to acknowledge that a timeout has occurred.

Thus, according to the present embodiment, even when the tracking subject can no longer be identified from the captured image, the pan/tilt control can be continued so that the camera direction of the camera 100 is oriented to the direction in which the tracking subject has been present immediately before.

If the driving of the camera is stopped immediately after the subject can no longer be detected, the pan/tilt will stop suddenly and the quality of the captured image will deteriorate. Therefore, by continuing pan/tilt control as in the present embodiment, it is possible to improve the quality of the captured image in tracking shooting.

Since in tracking shooting, a subject is detected and the camera is driven based on the detection result, the driving of the camera delays with respect to the movement of the subject in principle. Therefore, if the driving of the camera is stopped immediately after the subject can no longer be detected, the pan/tilt operation will stop even though the tracking subject has not reached the target position. However, by performing the processing described in the present embodiment, it is possible to stop the pan/tilt operation at a timing at which the pan/tilt movement reaches the position where the tracking subject is hidden.

In cases where the tracking subject hides in the shadow of an object, it is likely that the subject will appear again from the hidden location. That is, as in the present embodiment, by stopping pan/tilt operation at the position where the tracking subject is hidden, it is possible to stop pan/tilt operation at a position where the tracking subject that will appear again is easily detected.

The processing for calculating the control speed described in the first embodiment may be performed by the camera 100, the workstation 200, or a device separate from these devices. In other words, the control device that executes the processing for calculating the control speed may be incorporated in the camera 100, in the workstation 200, or may exist as a device separate from these devices. In addition, such a control device may be configured in hardware, software, or a combination of hardware and software.

Second Embodiment

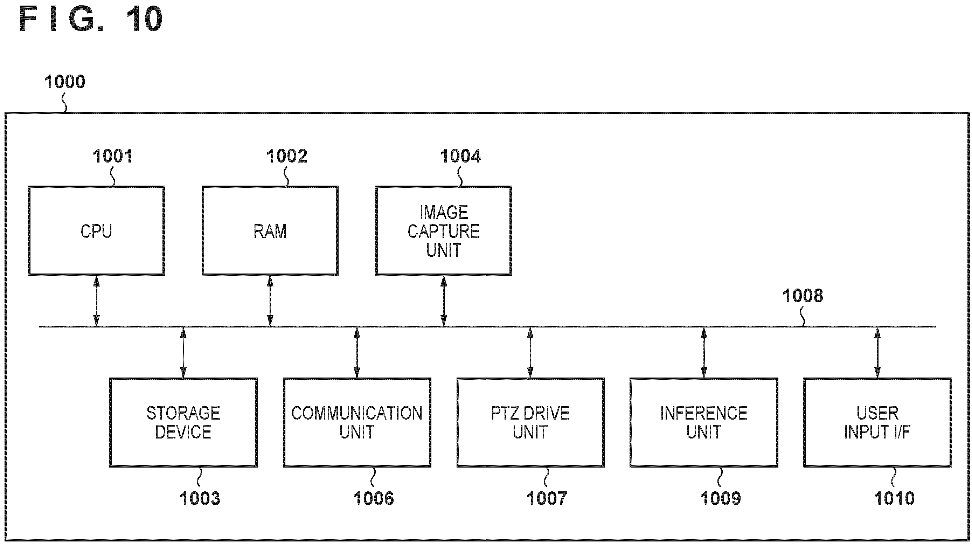

The present embodiment describes differences from the first embodiment, and other configurations are the same as those in the first embodiment unless otherwise noted below. In the present embodiment, a camera 1000 that has the functions of the camera 100 and can execute the processing (processing according to the flowchart of FIG. 4) of the workstation 200 is described. The following describes an example of a hardware configuration of the camera 1000 according to the present embodiment with reference to FIG. 10.

A CPU 1001, a RAM 1002, a storage device 1003, an image capture unit 1004, and a PTZ drive unit 1007 are the same as the CPU 101, the RAM 102, the storage device 103, the image capture unit 104, and the PTZ drive unit 107 illustrated in FIG. 1, and descriptions thereof are omitted.

The communication unit 1006 performs data communication with external devices via a network such as a LAN or the Internet. The method of data communication with external devices by the communication unit 1006 is not limited to a specific data communication method.

An inference unit 1009 is similar to the inference unit 206, except that it acquires captured images from the image capture unit 1004. A user input I/F 1010 is a user interface, such as a button, switch, lever, or touch panel screen, and can be operated by a user to input various information and instructions to the camera 1000.

The CPU 1001, the RAM 1002, the storage device 1003, the image capture unit 1004, the communication unit 1006, the PTZ drive unit 1007, the inference unit 1009, and the user input I/F 1010 are connected to a system bus 1008. The constituent components of the camera 1000 illustrated in FIG. 10 are driven by power obtained by rectifying AC power supplied from an external source to a predetermined voltage or by power supplied from a (not illustrated) built-in battery.

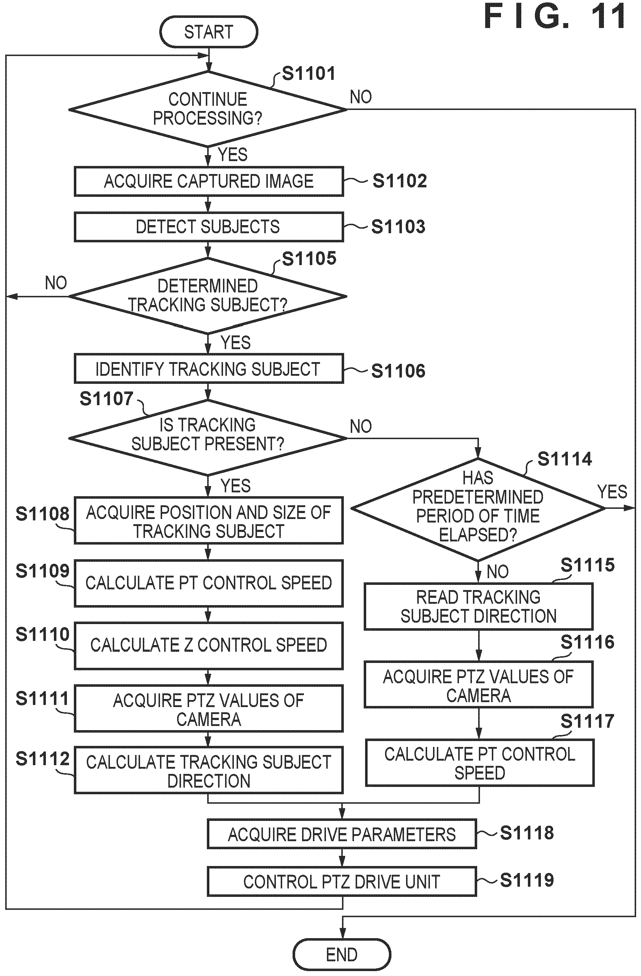

Tracking shooting of a tracking subject performed by the camera 1000 will be described with reference to the flowchart in FIG. 11. The flowchart of FIG. 11 is a flowchart of processing that is executed in response to the CPU 1001 detecting a tracking/shooting execution instruction input by the user via operation of the user input I/F 1010. The method for inputting a tracking/shooting execution instruction is not limited to a specific input method.

In step S1101, the CPU 1001 determines whether a command (end command) to end the processing according to the flowchart in FIG. 11 has been obtained via the communication unit 1006 or the user input I/F 1010. If it is determined that the end command has been obtained, the process according to the flowchart in FIG. 11 ends. If it is determined that the end command has not been obtained, the procedure moves to step S1102. In step S1102, the CPU 1001 acquires the captured image output from the image capture unit 1004, and stores the acquired captured image in the RAM 1002.

In step S1103, the CPU 1001 inputs the captured image stored in the RAM 1002 in step S1102 to the inference unit 1009. The inference unit 1009 performs subject detection processing on the input captured image by performing the same processing as the inference unit 206, and outputs rectangular frame information that defines a rectangular frame including the whole body (human body) of each subject detected from the captured image.

In step S1105, the CPU 1001 determines whether any tracking subject has been designated. If it is determined that the tracking subject has been designated, the procedure moves to step S1106. If it is determined that no tracking subject has been designated, the procedure moves to step S1101. The method for designating a tracking subject is not limited to a specific method.

In step S1106, the CPU 1001 performs the same processing as in step S406 above to perform identification processing for identifying the tracking subject from among the subjects detected in step S1103. If the CPU 1001 is able to identify the tracking subject from the subjects detected in step S1103, the CPU 1001 sets the value of the presence flag stored in the RAM 1002 to "True", and stores the rectangular frame information of the tracking subject from among the rectangular frame information output in step S1103 in RAM 1002.

If the CPU 1001 is not able to identify the tracking subject from the subjects detected in step S1103, the CPU 1001 sets the value of the presence flag stored in the RAM 1002 to "False".

Since the initial step S1106 is the first instance of step S1106 after the designation of the tracking subject, the CPU 1001 sets the value of the presence flag to "True" and stores the rectangular frame information of the designated tracking subject in RAM 1002. In the second and subsequent instances of step S1106, the CPU 1001 performs the same processing as in the second and subsequent instances of step S406.

In step S1107, the CPU 1001 determines whether the value of the presence flag is "True" or "False". As a result of the determination, if it is determined that the value of the presence flag is "True", the procedure moves to step S1108, and if the value of the presence flag is "False", the procedure moves to step S1114.

In step S1108, the CPU 1001 reads the rectangular frame information of the tracking subject stored in the RAM 1002. In step S1109, the CPU 1001 performs the same processing as in step S409 above to calculate the speed at which the camera 100 changes the camera direction (pan angle and tilt angle) to track the tracking subject and shoot an image thereof.

In step S1110, the CPU 1001 performs the same processing as in step S410 above to calculate the speed at which the camera 100 changes the zoom to track the tracking subject and shoot an image thereof.

In step S1111, the CPU 1001 acquires, for example, a set of the current pan angle of the camera 100, the current tilt angle of the camera 100, the current horizontal field angle of the camera 100, and the current vertical field angle of the camera 100, from the PTZ drive unit 1007. The CPU 1001 then stores the acquired set in the RAM 1002.

In step S1112, the CPU 1001 performs the same processing as in step S412 above to calculate the tracking subject direction. In step S1114, the CPU 1001 determines whether the period of time in which the value of the presence flag is "False" (i.e., the period of time in which the tracking subject is not present in the captured image) is not shorter than a predetermined period of time. As a result of the determination, if the period of time in which the value of the presence flag is "False" (i.e., the period of time in which the tracking subject is not present in the captured image) is longer than or equal to the predetermined period of time, the processing according to the flowchart of FIG. 11 ends. If the period of time in which the value of the presence flag is "False" (i.e., the period of time in which the tracking subject is not present in the captured image) is shorter than the predetermined period of time, the processing proceeds to step S1115.

In step S1115, the CPU 1001 reads, from the RAM 1002, the tracking subject direction calculated in the most recently executed step S1112. In step S1116, the CPU 1001 performs the same processing as in step S1111 above to acquire the above-described set, and stores the acquired set in the RAM 1002. In step S1117, the CPU 1001 performs the same processing as in step S417 above to calculate the pan control speed Vp and the tilt control speed Vt.

In step S1118, the CPU 1001 generates control commands to cause the PTZ drive unit 1007 to change the pan angle of the camera 1000 at the pan control speed Vp, change the tilt angle of the camera 1000 at the tilt control speed Vt, and change the zoom of the camera 1000 at the zoom control speed Vz. The CPU 1001 then performs the same process as in step S302 above to obtain the PTZ control speed of the camera 100 based on the generated control commands, and obtains the drive parameters based on the PTZ control speed.

In step S1119, the CPU 1001 performs the same processing as in step S303 above to control the PTZ drive unit 1007 based on the drive parameters obtained in step S1118.

In the first and second embodiments, a case where the subject to be detected is a person has been described. However, the attribute of the subject to be detected is not limited to a person, and the subject to be detected may be any attribute object.

The numeric values, processing timings, the orders of processing, processing operators, configuration/acquisition method/destination/storage place of data (information) and the like that are used in the above-described embodiments are merely examples provided for specific description, and the present disclosure is not intended to be limited to such examples.

Some or all of the above-described embodiments may be used in combination as appropriate. Some or all of the above-described embodiments may be used selectively.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present disclosue has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

**Claims**

1.   A control device **characterized by** comprising:

a memory storing a program; and
a processor configured to, when executing the program, cause the control device to:

calculate, if a tracking target can be detected from a captured image, a direction toward the tracking target as a tracking subject direction based on a result of the detection, and

control, if no tracking target can be detected from the captured image, a control speed in a camera direction based on a previously calculated tracking subject direction.

2. The control device according to claim 1, **characterized in that** the processor is further configured to cause the control device to, if a tracking target can be detected from the captured image, calculate the tracking subject direction based on a difference between a position of the tracking target detected from the captured image and a target position, a current camera direction, and a zoom.

3. The control device according to claim 1, **characterized in that** the processor is further configured to cause the control device to, if a tracking target can be detected from the captured image, calculate the control speed in the camera direction based on a difference between a position of the tracking target detected from the captured image and a target position.

4. The control device according to claim 1, **characterized in that** the processor is further configured to cause the control device to, if a tracking target can be detected from the captured image, calculate a control speed of a zoom based on a difference between a size of the tracking target detected from the captured image and a defined size.

5. The control device according to claim 1, **characterized in that** the processor is further configured to cause the control device to,
   if no tracking target can be detected from the captured image, change the camera direction in response to a period of time in which no tracking target can be detected after the control speed in the camera direction has been zero for a predetermined period of time.

6. The control device according to claim 1, **characterized in that** the processor is further configured to cause the control device to, if no tracking target can be detected from the captured image, calculate the control speed in the camera direction based on a difference between a current camera direction and the previously calculated tracking subject direction.

7. The control device according to claim 1, **characterized in that** the processor is further configured to cause the control device to,
   if no tracking target can be detected from the captured image, calculate the control speed in the camera direction based on a difference between a current camera direction and a tracking subject direction predicted based on the previously calculated tracking subject direction.

8. The control device according to claim 1, **characterized in that** the processor is further configured to cause the control device to, if no tracking target can be detected from the captured image, calculate the control speed in the camera direction based on a difference between a current camera direction and a tracking subject direction obtained by correcting the previously calculated tracking subject direction based on a size of the tracking target.

9. The control device according to claim 1, **characterized in that** the processor is further configured to cause the control device to:

   acquire a captured image shot by an image capture apparatus, and
   generate a command to change the camera direction at the controlled control speed and

   to transmit the generated command to the image capture apparatus.

10. The control device according to claim 1, **characterized by** further comprising:

    image capture means for capturing an image; and
    drive means for changing the camera direction at the controlled control speed.

11. A control method **characterized by** comprising:
    calculating, if a tracking target can be detected from a captured image, a direction toward the tracking target as a tracking subject direction based on a result of the detection; and
    controlling, if no tracking target can be detected from the captured image, a control speed in a camera direction based on a previously calculated tracking subject direction.

12. A computer-readable storage medium storing a computer program for causing a computer to execute a method, the method comprising:

   calculating, if a tracking target can be detected from a captured image, a direction toward the tracking target as a tracking subject direction based on a result of the detection; and

   controlling, if no tracking target can be detected from the captured image, a control speed in a camera direction based on a tracking subject direction previously calculated.

FIG. 1

# FIG. 2

# F I G. 3

```
        ┌─────────────┐
        │    START    │
        └─────────────┘
               │
               ▼
┌───────────────────────────────┐
│   RECEIVE CONTROL COMMAND      │──── S301
└───────────────────────────────┘
               │
               ▼
┌───────────────────────────────┐
│   ACQUIRE DRIVE PARAMETERS     │──── S302
└───────────────────────────────┘
               │
               ▼
┌───────────────────────────────┐
│   CONTROL PTZ DRIVE UNIT       │──── S303
└───────────────────────────────┘
               │
               ▼
        ┌─────────────┐
        │     END     │
        └─────────────┘
```

# F I G. 4

START

S401
CONTINUE PROCESSING? — NO

YES

ACQUIRE CAPTURED IMAGE — S402

DETECT SUBJECTS — S403

DISPLAY — S404

S405
NO ← DETERMINED TRACKING SUBJECT?

YES

IDENTIFY TRACKING SUBJECT — S406

S407
IS TRACKING SUBJECT PRESENT? — NO

YES

S414
HAS PREDETERMINED PERIOD OF TIME ELAPSED? — YES

NO

S408 ACQUIRE POSITION AND SIZE OF TRACKING SUBJECT

S415 READ TRACKING SUBJECT DIRECTION

S409 CALCULATE PT CONTROL SPEED

S410 CALCULATE Z CONTROL SPEED

S416 ACQUIRE PTZ VALUES OF CAMERA

S411 ACQUIRE PTZ VALUES OF CAMERA

S417 CALCULATE PT CONTROL SPEED

S412 CALCULATE TRACKING SUBJECT DIRECTION

TRANSMIT CONTROL COMMAND — S413

END

# FIG. 5

EP 4 601 312 A1

# F I G. 6A

# F I G. 6B

# F I G. 7A

[degree/sec]

PAN
CONTROL
SPEED

701

702

DISTANCE DIFFERENCE BETWEEN TARGET
POSITION AND HORIZONTAL DIRECTION OF
TRACKING SUBJECT

[Pixel]

# F I G. 7B

[degree/sec]

PAN
CONTROL
SPEED

711

712

ANGULAR DIFFERENCE BETWEEN
TRACKING SUBJECT PAN DIRECTION AND
CAMERA DIRECTION

[degree]

FIG. 8A

800

Wdiff

Hdiff

P(Wdiff,Hdiff)

FIG. 8B

Z-AXIS

801

800

X-AXIS

Y-AXIS

P(x,y,z)

FIG. 8C

Z-AXIS

Y-AXIS

X-AXIS  PANtarget  P(X,Y,Z)

TILTtarget

F I G. 9A

F I G. 9B

F I G. 9C

# F I G. 10

**FIG. 11**

START

S1101
CONTINUE PROCESSING? — NO

YES

ACQUIRE CAPTURED IMAGE — S1102

DETECT SUBJECTS — S1103

S1105
DETERMINED TRACKING SUBJECT? — NO

YES

IDENTIFY TRACKING SUBJECT — S1106

S1107
IS TRACKING SUBJECT PRESENT? — NO

YES

S1108 ACQUIRE POSITION AND SIZE OF TRACKING SUBJECT

S1109 CALCULATE PT CONTROL SPEED

S1110 CALCULATE Z CONTROL SPEED

S1111 ACQUIRE PTZ VALUES OF CAMERA

S1112 CALCULATE TRACKING SUBJECT DIRECTION

S1114
HAS PREDETERMINED PERIOD OF TIME ELAPSED? — YES

NO

READ TRACKING SUBJECT DIRECTION — S1115

ACQUIRE PTZ VALUES OF CAMERA — S1116

CALCULATE PT CONTROL SPEED — S1117

ACQUIRE DRIVE PARAMETERS — S1118

CONTROL PTZ DRIVE UNIT — S1119

END

Europäisches
Patentamt

European
Patent Office

Office européen
des brevets

# EUROPEAN SEARCH REPORT

**Application Number**

EP 25 15 6187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/284628 A1 (TUXEN FREDRIK [DK] ET AL) 8 September 2022 (2022-09-08)<br>* paragraph [0046] - paragraph [0076] *<br>* paragraph [0090] *<br>* paragraph [0114] - paragraph [0115] *<br>* paragraph [0150] - paragraph [0186] *<br>* figure 3 * | 1-5,9-12 | INV.<br>H04N23/695<br>H04N23/61 |
| X | US 11 048 277 B1 (ZHU JACK LOUIS [US] ET AL) 29 June 2021 (2021-06-29)<br>* column 9, line 24 - column 11, line 27 *<br>* figure 7 * | 1,5-7, 11,12 | |
| X | US 10 917 557 B2 (US GOV AIR FORCE [US]; US AIR FORCE [US]) 9 February 2021 (2021-02-09) | 1,5-7, 11,12 | |
| Y | * column 3, line 62 - column 4, line 14 *<br>* column 18, line 21 - column 19, line 30 *<br>* figure 12 * | 8 | |
| Y | US 2020/059595 A1 (ONO YUKI [US]) 20 February 2020 (2020-02-20)<br>* paragraph [0142] * | 8 | TECHNICAL FIELDS SEARCHED (IPC)<br>H04N |

The present search report has been drawn up for all claims

| Place of search | Date of completion of the search | Examiner |
|---|---|---|
| The Hague | 30 April 2025 | Didierlaurent, P |

**ANNEX TO THE EUROPEAN SEARCH REPORT
ON EUROPEAN PATENT APPLICATION NO.**

EP 25 15 6187

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | | Publication date | Patent family member(s) | | | Publication date |
|---|---|---|---|---|---|---|---|
| US 2022284628 | A1 | | 08-09-2022 | EP | 4302265 | A1 | 10-01-2024 |
| | | | | EP | 4302266 | A1 | 10-01-2024 |
| | | | | JP | 2024508136 | A | 22-02-2024 |
| | | | | JP | 2024508137 | A | 22-02-2024 |
| | | | | KR | 20230154002 | A | 07-11-2023 |
| | | | | KR | 20230154420 | A | 08-11-2023 |
| | | | | US | 2022280855 | A1 | 08-09-2022 |
| | | | | US | 2022284625 | A1 | 08-09-2022 |
| | | | | US | 2022284628 | A1 | 08-09-2022 |
| | | | | US | 2022288481 | A1 | 15-09-2022 |
| | | | | WO | 2022185276 | A1 | 09-09-2022 |
| | | | | WO | 2022185278 | A1 | 09-09-2022 |
| US 11048277 | B1 | | 29-06-2021 | US | 11048277 | B1 | 29-06-2021 |
| | | | | US | 2022019248 | A1 | 20-01-2022 |
| | | | | US | 2024053771 | A1 | 15-02-2024 |
| US 10917557 | B2 | | 09-02-2021 | US | 2020029013 | A1 | 23-01-2020 |
| | | | | US | 2021258471 | A1 | 19-08-2021 |
| US 2020059595 | A1 | | 20-02-2020 | EP | 3466060 | A1 | 10-04-2019 |
| | | | | JP | 6988146 | B2 | 05-01-2022 |
| | | | | JP | 2017216675 | A | 07-12-2017 |
| | | | | KR | 20190013759 | A | 11-02-2019 |
| | | | | US | 2020059595 | A1 | 20-02-2020 |

EPO FORM P0459

For more details about this annex : see Official Journal of the European Patent Office, No. 12/82

# EP 4 601 312 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012080221 A